(19) Europäisches Patentamt
European Patent Office
Office européen des brevets

(11) **EP 4 755 626 A1**

(12) **EUROPEAN PATENT APPLICATION**
published in accordance with Art. 153(4) EPC

(43) Date of publication:
**10.06.2026 Bulletin 2026/24**

(21) Application number: **24849169.8**

(22) Date of filing: **30.07.2024**

(51) International Patent Classification (IPC):
**B32B 15/08** (2006.01)     **E04F 13/12** (2006.01)

(52) Cooperative Patent Classification (CPC):
**B32B 15/08; E04F 13/12**

(86) International application number:
**PCT/JP2024/027148**

(87) International publication number:
**WO 2025/028524 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 JP 2023124306**

(71) Applicant: **Dai Nippon Printing Co., Ltd.**
**Tokyo 162-8001 (JP)**

(72) Inventors:
• **KAIDA, Takafumi**
**Aiko-gun, Kanagawa 243-0303 (JP)**
• **AOYAMA, Yuki**
**Aiko-gun, Kanagawa 243-0303 (JP)**
• **NAKAI, Kosuke**
**Aiko-gun, Kanagawa 243-0303 (JP)**
• **SATOU, Ryouichi**
**Aiko-gun, Kanagawa 243-0303 (JP)**

(74) Representative: **Müller-Boré & Partner**
**Patentanwälte PartG mbB**
**Friedenheimer Brücke 21**
**80639 München (DE)**

(54) **DECORATIVE MEMBER AND METHOD FOR MANUFACTURING SAME**

(57)     The present disclosure provides a decorative member comprising a metal substrate and a design layer, in this order in a thickness direction, wherein the design layer includes an organic colorant; and on a first surface located on the design layer side based on the metal substrate, the decorative member includes a region X having a flop index of 4.5 or more.

[FIG. 1]

EP 4 755 626 A1

## Description

Technical Field

The present disclosure relates to a decorative member and a method for producing the same.

Background Art

A decorative member, including a metal substrate and a design layer stacked in the thickness direction, is known as, for example, an interior member or an exterior member of a building. For example, Patent Document 1 discloses a decorative material including a texture region in which a plurality of convex portions independent from each other are gathered, on a metal substrate, wherein the convex portion includes a resin binder and a photoluminescent flake-shaped particle.

Citation List

Patent Document

Patent Document 1: WO 2022/209543

Summary of Disclosure

Technical Problem

As for the decorative member using a metal substrate, peculiar designs are possible by making use of the gloss feeling of the metal substrate, and the design expressions can be widened by making use of the peculiar designs. Meanwhile, when the design layer excessively hides the gloss feeling of the metal substrate, it may be difficult to making full use of the gloss feeling of the metal substrate. In contrast, when making use of the gloss feeling of the metal substrate is focused, it is necessary to limit the hiding of the gloss feeling by the design layer so that the range of design expression may be narrowed.

The present disclosure has been made in view of the above circumstances, and a main object of the present disclosure is to provide a decorative member wherein a wide variety of design expressions are possible while making use of the gloss feeling of the metal substrate.

Solution to Problem

The present disclosure provides a decorative member comprising a metal substrate and a design layer, in this order in a thickness direction, wherein the design layer includes an organic colorant; and on a first surface located on the design layer side based on the metal substrate, the decorative member includes a region X having a flop index of 4.5 or more.

Also, the present disclosure provides a method for producing a decorative member producing the decorative member described above, the method comprising: a metal substrate preparing step of preparing the metal substrate; and a design layer forming step of forming the design layer by coating one surface side of the metal substrate with a composition including the organic colorant, and heat curing.

Advantageous Effects of Disclosure

The present disclosure exhibits an effect that it is able to provide a decorative member wherein a wide variety of design expressions are possible while making use of the gloss feeling of the metal substrate.

Brief Description of Drawings

[FIG. 1] is a schematic cross-sectional view exemplifying a decorative member in the present disclosure.
[FIG. 2] is a schematic cross-sectional view exemplifying a decorative member in the present disclosure.
[FIGS. 3] are schematic cross-sectional views exemplifying a method for producing a decorative member in the present disclosure.

[FIG. 4] is a graph showing the results of Examples 1-1 to 1-4 and Comparative Examples 1-1 to 1-4.
[FIG. 5] is a graph showing the results of Examples 2-1 to 2-4 and Comparative Examples 2-1 to 2-4.
[FIG. 6] is a graph showing the results of Examples 3-1 to 3-4.
[FIG. 7] is a graph showing the results of Examples 4-1 to 4-4.

Description of Embodiments

Embodiments are hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure.

In the present descriptions, in expressing an aspect wherein some member is disposed on the other member, when described as merely "above" or "below", unless otherwise stated, it includes both of the following cases: a case wherein some member is disposed directly on or directly below the other member so as to be in contact with the other member, and a case wherein some member is disposed on the upper side or the lower side of the other member via yet another member. Also, in the present descriptions, on the occasion of expressing an aspect wherein some member is disposed on the surface of the other member, when described as merely "on the surface", unless otherwise stated, it includes both of the following cases: a case wherein some member is disposed directly on or directly below the other member so as to be in contact with the other member, and a case wherein some member is disposed on the upper side or the lower side of the other member via yet another member.

The decorative member and the method for producing a decorative member in the present disclosure are hereinafter described in detail.

A. Decorative member

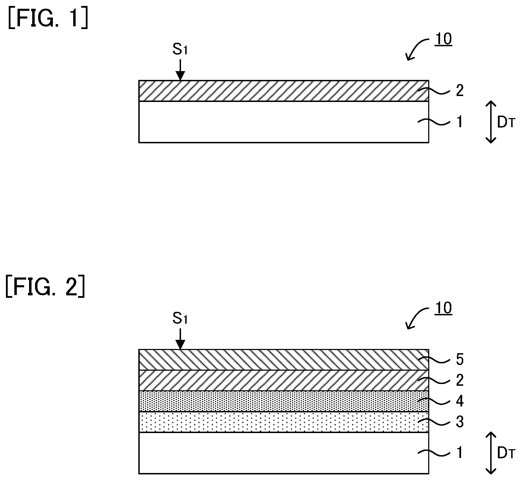

FIG. 1 and FIG. 2 are schematic cross-sectional views exemplifying the decorative member in the present disclosure. The decorative member 10 shown in FIG. 1 comprises a metal substrate 1 and a design layer 2, in this order in the thickness direction $D_T$. The design layer 2 includes an organic colorant. Also, on a first surface $S_1$ located on the design layer 2 side based on the metal substrate 1, the decorative member 10 includes a region X having a flop index of 4.5 or more. Also, as shown in FIG. 2, the decorative member 10 may comprise a metal substrate 1, a primer layer 3, an underlying layer 4, a design layer 2 and a surface protective layer 5 in this order in the thickness direction $D_T$.

According to the present disclosure, since the design layer includes the organic colorant, and the flop index of the first surface is 4.5 or more, a wide variety of design expressions are possible in the decorative member, while making use of the gloss feeling of the metal substrate. As for the decorative member using a metal substrate, as described above, peculiar designs are possible by making use of the gloss feeling of the metal substrate, and the design expressions can be widened by making use of the peculiar designs. In other words, it is possible to express designs making use of the base material of the metal substrate, and more specifically, to express designs with metallic tones in which the luminosity, saturation, and hue vary greatly depending on the angle of observation.

Meanwhile, when the design layer excessively hides the gloss feeling of the metal substrate, it may be difficult to making full use of the gloss feeling of the metal substrate. In contrast, when making use of the gloss feeling of the metal substrate is focused, it is necessary to limit the hiding of the gloss feeling by the design layer so that the range of design expression may be narrowed. For example, when inorganic colorants are used, when the ratio of the inorganic colorants is increased (the color is darker), the hiding property of the design layer increases, making it difficult to make full use the gloss feeling of the metal substrate. Meanwhile, when making use of the gloss feeling of the metal substrate is focused, it is difficult to increase the ratio of the inorganic colorants (make the color darker) so that the range of design expression is narrowed.

In contrast, in the present disclosure, since the design layer includes organic colorants, it is possible to express designs with high luminosity and saturation (various color expressions) without overly hiding the gloss feeling of the metal substrate. Specifically, it is possible to reproduce design expressions such as brass, copper, corrosion patterns, and polishing patterns at higher level than ever before. Also, in the present disclosure, since the flop index on the first surface is 4.5 or more, the gloss feeling of the metal substrate can be fully utilized. In the standard color difference evaluation, it is difficult to quantitatively evaluate the gloss feeling of a metal substrate since it is greatly affected by the glossiness of the surface of the decorative member. In contrast to this, in the present disclosure, by focusing on the flop index, the gloss feeling of a metal substrate can be evaluated quantitatively without being significantly affected by the glossiness of the surface of the decorative member.

1. Flop index

As shown in FIG. 1, in the present disclosure, on the first surface $S_1$ located on the design layer 2 side based on the metal substrate 1, the decorative member includes a region X having a flop index of 4.5 or more.

The gloss feeling of the metal substrate changes greatly in the luminosity, saturation, and hue depending on the locations or angle of receiving light and observation. This changing property is called a flop, and the index quantitatively evaluating the flop is a flop index. The flop index is calculated from the following formula using each L* ($L^*_{15}$, $L^*_{45}$, $L^*_{110}$) at the effect angles of 15°, 45°, and 110°.

$$\text{Flop index} = 2.69 \times (L^*_{15} - L^*_{110})^{1.11} / (L^*_{45})^{0.85}$$

The details of the method for measuring a flop index will be described in Examples below.

The flop index of the region X may be 5 or more, may be 6 or more, may be 7 or more, and may be 8 or more. Also, viewing from the thickness direction, the region X is usually a region including an organic colorant.

Viewing the decorative member from the design layer side, the area of the design layer is regarded as $S_A$ and the area of the region X is regarded as $S_B$. The ratio ($S_B/S_A$) of the $S_B$ with respect to the $S_A$ is, for example, 1% or more, may be 3% or more, and may be 5% or more. Meanwhile, although it depends on the design of the design layer, the $S_B/S_A$ may be 100%, and may be less than 100%. In the latter case, the design includes a region making the use of the gloss feeling of the metal substrate (region X), and a region not making the use of the gloss feeling of the metal substrate (region Y not corresponding the region X). The $S_B/S_A$ may be 80% or less, and may be 60% or less.

2. Design layer

The design layer in the present disclosure is a layer imparting a designability to the decorative member, and includes an organic colorant. The design layer may be a pattern layer including a picture pattern (pattern); may be a solid layer (a layer including a solid ink); and may be a combination of the pattern layer and the solid layer.

Examples of the pattern design in the pattern layer may include wood-grain patterns, marble stone patterns, stone-grain patterns, sand-grain patterns, tile laying patterns, brick laying patterns, fabric-grain patterns, leather tie-dyed patterns, geometric shapes, letters, symbols, abstract patterns, plant and flower patterns, wave patterns, stripe patterns, metallic tone (metallic) patterns, and rusty patterns.

The design layer includes an organic colorant (organic pigments or organic dyes). Examples of the organic colorant may include perylene based colorants, cyanine based colorants, nickel-azo complex based colorants, azomethine based colorants, quinacridone based colorants, and isoindolinone based colorants and.

The average particle size of the organic colorant is, for example, 100 μm or more and 350 μm or less, and may be 200 μm or more and 300 μm or less. In the present specification, the average particle size means the 50% particle size (d50: median size) when the particle size distribution measured by the dynamic light scattering method expressed by the volume cumulative distribution. Also, the content of the organic colorant in the layer including the organic colorant, with respect to 100 parts by mass of the resin components, is, for example, 1 part by mass or more and 40 parts by mass or less.

Meanwhile, the design layer may include an inorganic colorant (inorganic pigments or inorganic dyes). Examples of the inorganic colorant may include carbon black, iron black, titanium white, antimony white, titanium yellow, pyrite, Bengal red, cadmium red, ultramarine blue, and cobalt blue. Also, as the colorant, the design layer may include metallic based colorants such as aluminum and brass; and pearl based colorants such as titanium dioxide coated mica and basic lead carbonate.

The design layer includes resin. The resin included in the design layer is preferably a cured product (cross-linked structure) of a curable resin, and more preferably a cured product of a thermosetting resin. Examples of the resins included in the design layer may include fluorine based resins, epoxy based resins, phenolic based resins, urea based resins, polyester based resins, melamine based resins, alkyd based resins, amide based resins, polyimide based resins, silicone based resins, acrylic based resins, urethane based resins, urethane-acrylic based resins, styrene based resins and cellulose based resins. Among them, the curable resin is preferably a fluorine based resin. The reason therefor is to obtain good weather resistance. Examples of the fluorine based resins may include fluoroethylene-vinyl ether copolymer, fluoroethylene-vinyl ester copolymer, and fluoroethyleneacrylic copolymer.

The resin included in the design layer may be a cured product of resin composition including a curable resin and curing agent. Examples of the curing agent may include isocyanate compounds such as tolylene diisocyanates (TDI), diphenylmethane diisocyanate (MDI), hexamethylene diisocyanate (HDI), isophorone diisocyanate (IPID), and xylylene diisocyanate (XDI). Also, the ratio of the curing agent, with respect to 100 parts by mass of curable resin is not particularly limited, and is, for example, 30 parts by mass or more and 70 parts by mass or less, and may be 35 parts by mass or more and 65 parts by mass or less. Also, the design layer may include an additive such as weather resistant agent. Details of the weather resistant agent will be described later.

The design layer may be a single-layer structure, and may be a stacked-layer structure of two layers or more. The design layer preferably includes a pattern layer including the organic colorant. The pattern layer including the organic colorant may be one layer, and may be two layers or more. Also, the design layer may include a solid layer including the organic colorant. The solid layer including the organic colorant may be one layer, and may be two layers or more. Also, although the design layer includes at least a layer including the organic colorant, it may further include a layer including an inorganic colorant. The layer including an inorganic colorant may be a pattern layer including an inorganic colorant, may be a solid layer including an inorganic colorant, and may be the both. The pattern layer including an inorganic colorant and the solid layer including the inorganic colorant may respectively be one layer, and may be two layers or more.

In the thickness direction, the design layer may include a layer including an inorganic colorant, and a layer including an organic colorant, in this order, from the metal substrate side. The layer including an inorganic colorant and the layer including an organic colorant may be independently and respectively a solid layer, and may be a pattern layer. For example, the color of the metal substrate can be adjusted by providing a solid layer including inorganic colorant. Alternatively, complex design expressions are possible by overlaying the pattern layer including an inorganic colorant and the pattern layer including an organic colorant so that it is possible to make the use of the gloss feeling of the metal substrate due to the layer including an organic colorant, while partially providing a hiding portion due to the layer including an inorganic colorant.

Similarly, in the thickness direction, the design layer may include a layer including an organic colorant, and a layer including an inorganic colorant, in this order, from the metal substrate side. Also in this case, the layer including an organic colorant and the layer including an inorganic colorant may be independently and respectively a solid layer, and may be a pattern layer. Also, the design layer may include a layer including both the organic colorant and inorganic colorant. Incidentally, the design layer may not include a layer including an inorganic colorant.

The design layer is preferably a baking layer. The baking layer is a layer formed by heat curing (bakingpainting) of a coated composition, and for example, it is a layer different from the design layer adhered via an adhesive layer. Also, the thickness of the design layer is not particularly limited, and is, for example, 1 $\mu$m or more and 10 $\mu$m or less, and may be 3 $\mu$m or more and 7 $\mu$m or less. Incidentally, when the design layer includes a plurality of layers, the total thickness of the plurality of layers is preferably in the above range.

(3) Metal substrate

The metal substrate in the present disclosure is a substrate including a metal element. Examples of the metal element included in the metal substrate may include aluminum, iron, copper, and titanium. The metal substrate preferably includes the metal elements described above as a main component.

The metal substrate may be a metal simple substance including one type of the metal element, and may be an alloy including two types of the metal elements. Also, the metal substrate may include a carbon component. Specific examples of the metal substrate may include aluminum substrates, aluminum alloy substrates (such as duralumin substrates), steel substrates (steel substrates), stainless steel substrates, copper substrates, copper alloy substrates (such as brass substrates, bronze substrates), titanium substrates, and titanium alloy substrates. The surface of the metal substrate may be plated.

The shape of the metal substrate is not particularly limited, and examples may include a plate shape. Also, the plate shaped metal substrate may be subjected to a bending process. The thickness of the metal substrate is not particularly limited, and is, for example, 0.02 mm or more and 5 mm or less, and may be 0.4 mm or more and 3 mm or less.

4. Primer layer

The decorative member in the present disclosure may include a primer layer between the metal substrate and design layer. By providing the primer layer, the close adhesiveness between two layers adjacent to the primer layer can be improved.

The primer layer includes a resin. The resin included in the primer layer is preferably a cured product (cross-linked structure) of a curable resin, and more preferably a thermosetting resin. Examples of the resin included in the primer layer may include urethane based resins, acrylic polyol based resins, acrylic based resins, ester based resins, amide based resins, butyral based resins, styrene based resins, urethane-acrylic copolymers, polycarbonate based urethane-acrylic copolymers (urethane-acrylic copolymers deriving from polymers (polycarbonate polyol) including a carbonate bond on the main chain of the polymer, and including 2 or more hydroxy groups on the terminal, side chain), vinyl chloride-vinyl acetate copolymer resins, vinyl chloride-vinyl acetate-acrylic copolymer resins, chlorinated propylene based resins, nitrocellulose based resins (cellulose nitrate), cellulose acetate based resins and fluorine based resins.

The resin included in the primer layer may be a cured product of resin composition including a curable resin and curing agent. Examples of the curing agent may include isocyanate compounds such as tolylene diisocyanates (TDI), diphenylmethane diisocyanate (MDI), hexamethylene diisocyanate (HDI), isophorone diisocyanate (IPID), and xylylene diisocyanate (XDI). Also, the primer layer may include an additive such as weather resistant agent. Details of the weather resistant agent will be described later.

The primer layer is preferably a baking layer. Also, the thickness of the primer layer is not particularly limited, and is, for example, 1 $\mu$m or more and 10 $\mu$m or less, and may be 2 $\mu$m or more and 5 $\mu$m or less.

5. Underlying layer

The decorative member in the present disclosure may include an underlying layer between the metal substrate and design layer. For example, the gloss feeling of the metal substrate can be adjusted by providing the underlying layer. In order to make the use of the gloss feeling of the metal substrate, the underlying layer is usually a transparent (colored and transparent, or colorless and transparent) layer.

The underlying layer includes resin. The resin included in the underlying layer is preferably a cured product (cross-linked structure) of a curable resin, and more preferably a cured product of a thermosetting resin. Also, the curable resin is preferably a fluorine based resin. The reason therefor is to obtain good weather resistance. Also, the underlying layer may or may not include a colorant. Also, the underlying layer may include an inorganic colorant. Since the curable resin and colorant are similar to the curable resin used for the design layer described above, the descriptions herein will be omitted. Also, the underlying layer may include an additive such as weather resistant agent. Details of the weather resistant agent will be described later.

The underlying layer is preferably a baking layer. Also, the thickness of the underlying layer is not particularly limited, and is, for example, 5 $\mu$m or more and 40 $\mu$m or less, and may be 10 $\mu$m or more and 30 $\mu$m or less.

6. Surface protective layer

The decorative member in the present disclosure may include a surface protective layer on an opposite side to the metal substrate, based on the design layer. By providing the surface protective layer, for example, the scuff resistance of the decorative member is improved.

The surface protective layer includes a resin. The resin included in the surface protective layer is preferably a cured product (cross-linked structure) of a curable resin, and more preferably a cured product of a thermosetting resin.

Also, the curable resin is preferably a fluorine based resin. The reason therefor is to obtain good weather resistance. Also, the surface protective layer may include a colorant. Since the curable resin and colorant are similar to the curable resin used for the design layer described above, the descriptions herein will be omitted.

The surface protective layer may include one type or two types or more of fillers. Examples of the filler may include organic fillers. Examples of the organic filler may include resin fillers such as acrylic based resins, urethane based resins, nylon based resins, olefin based resins and urethane based resins. Among them, the acrylic based resin fillers (acrylic beads) are preferable. This is because the acrylic based resin fillers have good heat resistance, and have few limitations on production. Meanwhile, other examples of the filler may include inorganic fillers. Examples of the inorganic filler may include silica, clay, heavy calcium carbonate, light calcium carbonate, precipitated barium sulfate, calcium silicate and synthesized silicate.

The average particle size of the filler is, for example, 5 $\mu$m or more and 60 $\mu$m or less, may be 10 $\mu$m or more and 50 $\mu$m or less, and may be 20 $\mu$m or more and 40 $\mu$m or less.

The surface protective layer preferably includes a weather resistant agent. Since the organic colorant included in the design layer is generally low in weather resistance, the surface protective layer preferably includes sufficient weather resistance. Examples of the weather resistant agent may include an ultraviolet absorber and a light stabilizer.

Examples of the ultraviolet absorber may include organic based ultraviolet absorber such as triazine based ultraviolet absorbers, benzotriazole based ultraviolet absorbers, benzophenone based ultraviolet absorbers, oxybenzophenone based ultraviolet absorbers, salicylic acid ester based ultraviolet absorbers, and cyano(meth)acrylate based ultraviolet absorbers; and inorganic based ultraviolet absorbers such as titanium dioxide, cerium oxide, and zinc oxide. Among these, triazine based ultraviolet absorbers are preferable.

Examples of the triazine based ultraviolet absorbers may include hydroxyphenyltriazine based ultraviolet absorbers. Examples of the hydroxyphenyltriazine based ultraviolet absorber may include 2-(2-hydroxy-4-[1-octyloxycarbonylethoxy]phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, and 2-(4,6-diphenyl-1,3,5-triazine-2-yl)-5[2-(2-ethylhexanoyloxy)ethoxy]phenol.

The content of ultraviolet absorber included in the surface protective layer is, for example, 0.5 parts by mass or more and 10 parts by mass or less, may be 0.8 parts by mass or more and 8 parts by mass or less, and may be 1 part by mass or more and 5 parts by mass or less, with respect to 100 parts by mass of the resin component. When the content of the ultraviolet absorber is high, the ultraviolet absorber may bleed-out, and when the content of the ultraviolet absorber is low, sufficient ultraviolet absorbing property may not be obtained.

Meanwhile, examples of the light stabilizer may include hindered amine based light stabilizers. Examples of the hindered amine light stabilizer may include 1,2,2,6,6-pentamethyl-4-piperidinyl methacrylate, bis (1,2,2,6,6-pentamethyl-4-piperidyl) sebacate, bis (2,2,6,6-pentamethyl-4-piperidyl)sebacate, bis(1,2,2,6,6-pentamethyl-4-piperidinyl) sebacate, methyl(1,2,2,6,6-pentamethyl-4-piperidinyl)sebacate, and 2,4-bis[N-butyl-N-(1-cyclohexyloxy-2,2,6,6-tetramethylpiperidine-4-yl)amino]-6-(2-hydroxyethylamine)-1,3,5-triazine.

The content of the light stabilizer included in the surface protective layer is, for example, 1 part by mass or more and 10 parts by mass or less, may be 1.5 parts by mass or more and 8 parts by mass or less, and may be 2 parts by mass or more and 5 parts by mass or less, with respect to 100 parts by mass of the resin components. When the content of the light stabilizer is high, the light stabilizer may bleed-out, and when the content of the light stabilizer is low, sufficient light stabilizing property may not be obtained.

The surface protective layer is preferably a baking layer. Also, the thickness of the surface protective layer is not particularly limited, and is, for example, 5 $\mu$m or more and 40 $\mu$m or less, and may be 10 $\mu$m or more and 30 $\mu$m or less.

7. Decorative member

The decorative member in the present disclosure comprises a metal substrate and a design layer, in this order in the thickness direction. The decorative member may further include at least one of the primer layer, underlying layer, and surface protective layer described above. The layer structure of the decorative member in the present disclosure is not particularly limited, and examples may include the following layer structures. The symbol "/" indicates the boundary of each layer. Also, the two members subdivided by the symbol "/" may be arranged so that they are in direct contact, and may be arranged via another member.

(1) Metal substrate/design layer
(2) Metal substrate/primer layer/design layer
(3) Metal substrate/underlying layer/design layer
(4) Metal substrate/primer layer/underlying layer/design layer
(5) Metal substrate/design layer/surface protective layer
(6) Metal substrate/primer layer/design layer/surface protective layer
(7) Metal substrate/underlying layer/design layer/surface protective layer
(8) Metal substrate/primer layer/underlying layer/design layer/surface protective layer

On a first surface located on the design layer side based on the metal substrate, the decorative member in the present disclosure may include a plurality of convex portions (raised portion). The convex portion preferably includes at least one of the filler and the colorant; and a binder resin agglutinating the at least one of the filler and the colorant. The type of the colorant is not particularly limited, and examples thereof may include pearl based colorants. Also, the average height of the convex portion is, for example, 10 $\mu$m or more and 60 $\mu$m or less, may be 15 $\mu$m or more and 45 $\mu$m or less, and may be 25 $\mu$m or more and 35 $\mu$m or less. The average height of the convex portion is determined as the arithmetic average of the convex portion heights at, for example, 100 points or more.

The use application of the decorative member in the present disclosure is not particularly limited. It may be used as an interior member (member for indoor), and may be used as an exterior member (member for outdoor). Examples of the use application of the decorative member may include construction materials such as walls, floors, ceilings, roofs, blindfolds for balconies and eaves; joinery such as partitions, doors, window frames, handrails, peripheral edges, entrance doors, and malls; components of vehicles such as automobiles and trains; bathroom products such as unit baths; furniture; home appliances; and kitchen products.

B. Method for producing decorative member

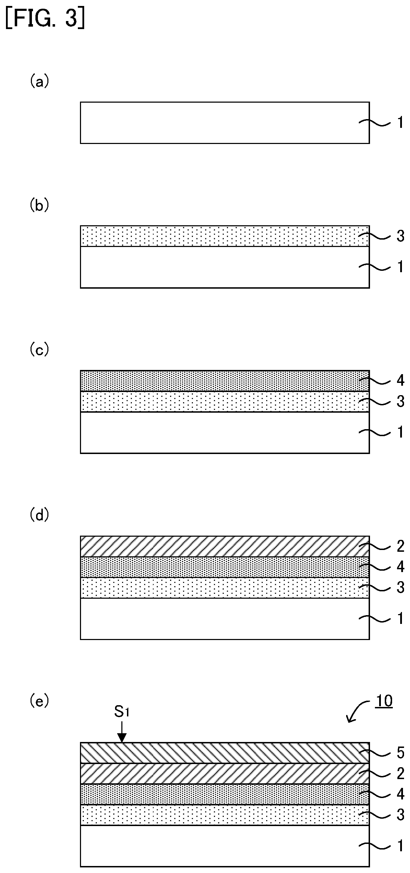

FIGS. 3 are schematic cross-sectional views exemplifying a method for producing a decorative member in the present disclosure. Firstly, as shown in FIG. 3(a), a metal substrate 1 is prepared (metal substrate preparing step). Then, as shown in FIG. 3(b), a primer layer 3 is formed on one surface of the metal substrate 1 (primer layer forming step). Then, as shown in FIG. 3(c), an underlying layer 4 is formed on the surface of the primer layer 3 that is opposite to the metal substrate 1 (underlying layer forming step). Then, as shown in FIG. 3(d), a design layer 2 is formed by coating the surface of the underlying layer 4 that is opposite to the primer layer 3 with a composition including the organic colorant, and heat curing (design layer forming step). Then, as shown in FIG. 3(e), a surface protective layer 5 is formed on the surface of the design layer 2 that is opposite to the underlying layer 4 (surface protective layer forming step).

Thereby, a decorative member 10 is obtained. On the first surface $S_1$ located on a design layer 2 side based on the metal substrate 1, the flop index of the decorative member 10 is 4.5 or more.

According to the present disclosure, since the design layer is formed using the composition including the organic colorant, and the flop index of the first surface is 4.5 or more, it is possible to obtain a decorative member wherein a wide variety of design expressions are possible while making use of the gloss feeling of the metal substrate.

1. Metal substrate preparing step

The method for producing a decorative member in the present disclosure comprises a metal substrate preparing step of preparing the metal substrate. The metal substrate is similar to the contents described in "A. Decorative member" above.

2. Primer layer forming step

The method for producing a decorative member in the present disclosure may include a primer layer forming step of forming a primer layer on one surface of the metal substrate. In the primer layer forming step, the primer layer may be formed directly on one surface of the metal substrate, and may be formed via another layer.

Examples of a method for forming a primer layer may include a method wherein a composition for a primer layer is applied and heat cured. Examples of the method for coating a composition may include roll coating, reverse coating, air spray coating, electrostatic coating and powder coating. Viewing from the thickness direction, the primer layer is formed, for example, on the entire surface of the metal substrate. The heating temperature (achieved temperature of the substrate) is, for example, 100°C or more and 300°C or less.

3. Underlying layer forming step

The method for producing a decorative member in the present disclosure may include an underlying layer forming step of forming an underlying layer on one surface of the metal substrate. In the underlying layer forming step, the underlying layer may be formed directly on one surface of the metal substrate, and may be formed via another layer such as the primer layer described above.

Examples of the method for forming the underlying layer may include a method wherein a composition for an underlying layer is applied and heat cured. Examples of the method for coating a composition may include flow coating, roll coating, reverse coating, air spray coating, electrostatic coating and powder coating. Viewing from the thickness direction, the underlying layer is formed, for example, so as to cover the entire surface of the metal substrate. The heating temperature (achieved temperature of the substrate) is, for example, 150°C or more and 300°C or less, and may be 200°C or more and 250°C or less.

4. Design layer forming step

The method for producing a decorative member in the present disclosure comprises a design layer forming step of forming the design layer by coating one surface side of the metal substrate with a composition including the organic colorant, and heat curing.

In the design layer forming step, the design layer may be formed directly on one surface of the metal substrate, and may be formed via another layer such as the primer layer and underlying layer described above.

Examples of the method for forming the design layer may include a method wherein a composition for a design layer is applied and heat cured. Examples of the method for coating a composition may include gravure printing, offset printing, gravure offset printing, flexographic printing, typographical printing, screen printing, inkjet printing, and transfer printing. Viewed from the thickness direction, the design layer may be formed so as to cover the entire surface of the metal substrate, and may be formed so as to cover a part of the metal substrate. The heating temperature (achieved temperature of the substrate) is, for example, 150°C or more and 300°C or less, and may be 200°C or more and 250°C or less. Also, when a step of forming other layers such as the surface protective layer described later is carried out as a post-process, the heating and curing to form the design layer may be carried out before the post-process, and may be carried out at the same time as the heating and curing to form other layers in the post-process.

5. Surface protective layer forming step

The method for producing a decorative member in the present disclosure may include a surface protective layer forming step of forming a surface protective layer on the surface of the design layer that is opposite to the metal substrate. In the surface protective layer forming step, the surface protective layer may be formed directly on the surface of the design layer that is opposite to the metal substrate, and may be formed via another layer.

Examples of the method for forming the surface protective layer may include a method wherein a composition for a surface protective layer is applied and heat cured. Examples of the method for coating a composition may include flow coating, roll coating, reverse coating, air spray coating, electrostatic coating and powder coating. Viewing from the thickness direction, the surface protective layer is formed, for example, so as to cover the entire surface of the metal substrate. The heating temperature (achieved temperature of the substrate) is, for example, 150°C or more and 300°C or less, and may be 200°C or more and 250°C or less.

6. Decorative member

The decorative member obtained by the respective steps described above is similar to the contents described in "A. Decorative member" above.

The present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

Examples

[Example 1-1]

An aluminum plate (A3004PH32, dimensions: 300 mm × 600 mm, thickness: 1.0 mm, chromate-treated) was prepared as the metal substrate. Then, as a pretreatment, the prepared aluminum plate was washed with hot water, and then, dried at 150°C (achieved temperature of the substrate).

Then, the entire surface of the aluminum plate was coated with the following composition for an underlying layer, with a curtain flow coater, so that the film thickness after drying was 18 $\mu$m. After that, it was baked at 216°C (achieved temperature of the substrate) to form an underlying layer.

(Composition for underlying layer)

Thermosetting fluorine resin (fluoroethylene-vinyl ether copolymer)
Curing agent (isocyanate)
Grey based colorant (titanium oxide, chromium oxide; 5% by mass with respect to the thermosetting fluorine resin)
Solvent (xylene: toluene = 1: 1, mass ratio)
Solid content: 17% by mass

Then, the entire surface of the underlying layer was coated with the following composition for a design layer, by a gravure offset printing, so that the film thickness after drying was 0.5 $\mu$m or more and 1.5 $\mu$m or less.

(Composition for design layer)

Thermosetting fluorine resin (fluoroethylene-vinyl ether copolymer)
Curing agent (isocyanate)
Organic colorant (3-color blend of perylene based pigment (red), cyanine based pigment (blue), nickel azo complex based pigment (yellow); 15% by mass with respect to the thermosetting fluorine resin)
Solvent (xylene: cyclohexane = 1: 1, mass ratio)
Solid content: 19% by mass

Then, the entire surface of the design layer was coated with the following composition for a surface protective layer A, with a bar coater, so that the film thickness after drying was 19 $\mu$m. After that, it was baked at 224°C (achieved temperature of the substrate) to form a surface protective layer, and thereby obtained a decorative member. Incidentally, the obtained surface protective layer is referred to as a surface protective layer A.

(Composition for surface protective layer A)

Thermosetting fluorine resin (fluoroethylene-vinyl ether copolymer)
Curing agent (isocyanate)
Solvent (xylene: toluene = 1: 1, mass ratio)
Solid content: 30% by mass

[Example 1-2]

A decorative member was obtained in the same manner as in Example 1-1 except that the following composition for a surface protective layer B was used instead of the composition for surface protective layer A. Incidentally, the obtained surface protective layer is referred to as a surface protective layer B.

(Composition for surface protective layer B)

Thermosetting fluorine resin (fluoroethylene-vinyl ether copolymer)
Curing agent (isocyanate)
Filler (silica, average particle size of 1 $\mu$m; 10% by mass with respect to the thermosetting fluorine resin)
Solvent (xylene: toluene = 1: 1, mass ratio)
Solid content: 30% by mass

[Example 1-3]

A decorative member was obtained in the same manner as in Example 1-1 except that the following composition for a surface protective layer C was used instead of the composition for surface protective layer A. Incidentally, the obtained surface protective layer is referred to as a surface protective layer C.

(Composition for surface protective layer C)

Thermosetting fluorine resin (fluoroethylene-vinyl ether copolymer)
Curing agent (isocyanate)
Filler (silica, average particle size of 1 $\mu$m; 10% by mass with respect to the thermosetting fluorine resin)
Filler (acrylic beads, average particle size of 10 $\mu$m; 4% by mass with respect to the thermosetting fluorine resin)
Filler (acrylic beads, average particle size of 30 $\mu$m; 2% by mass with respect to the thermosetting fluorine resin)
Solvent (xylene toluene = 1: 1, mass ratio)
Solid content: 30% by mass

[Example 1-4]

A decorative member was obtained in the same manner as in Example 1-1 except that the following composition for a surface protective layer D was used instead of the composition for surface protective layer A. Incidentally, the obtained surface protective layer is referred to as a surface protective layer D.

(Composition for surface protective layer D)

Thermosetting fluorine resin (fluoroethylene-vinyl ether copolymer)
Curing agent (isocyanate)
Filler (silica, average particle size of 1 $\mu$m; 10% by mass with respect to the thermosetting fluorine resin)
Filler (acrylic beads, average particle size of 30 $\mu$m; 4% by mass with respect to the thermosetting fluorine resin)
Filler (acrylic beads, average particle size of 50 $\mu$m; 2% by mass with respect to the thermosetting fluorine resin)

Solvent (xylene: toluene = 1: 1, mass ratio)
Solid content...30% by mass

[Examples 2-1 to 2-4]

Decorative members were respectively obtained in the same manner as in Examples 1-1 to 1-4 except that only the perylene based pigment (red) was used as the organic colorant included in the composition for a design layer.

[Examples 3-1 to 3-4]

Decorative members were respectively obtained in the same manner as in Examples 1-1 to 1-4 except that only the cyanine based pigment (blue) was used as the organic colorant included in the composition for a design layer.

[Examples 4-1 to 4-4]

Decorative members were respectively obtained in the same manner as in Examples 1-1 to 1-4 except that only the nickel azo complex based pigment (yellow) was used as the organic colorant included in the composition for a design layer.

[Comparative Examples 1-1 to 1-4]

Decorative members were respectively obtained in the same manner as in Examples 1-1 to 1-4 except that inorganic colorants (3-color blend of iron oxide based pigment (red), cobalt based pigment (blue) and iron oxide based resin (yellow)) were used instead of the organic colorants included in the composition for a design layer.

[Comparative Examples 2-1 to 2-4]

Decorative members were respectively obtained in the same manner as in Examples 1-1 to 1-4 except that the iron oxide based pigment (red) was used instead of the organic colorant included in the composition for a design layer.

[Evaluation]

The flop index was measured using the decorative member obtained in each Example and each Comparative Example. Specifically, the luminosity index L* was measured, using a three-dimensional deflection angle spectrophotometric colorimeter system (model number: GCMS-4 from Murakami Color Research Laboratory Co., Ltd.), by disposing a decorative member horizontally so that the surface protective layer was the upper surface. Using a light source D65, the L* at light receiving angles of 30°, 0° and -65° were measured under measurement conditions of incidence angle of 45°, tilt angle of 0° and in-plane rotation angle of 0°. Then, the flop index was calculated from the following formula. The results are shown in Table 1 and Table 2.

$$\text{Flop index} = 2.69 \times (L^*_{15} - L^*_{110})^{1.11} / (L^*_{45})^{0.85}$$

($L^*_{15}$ corresponds to the L* at light receiving angles of 30°, $L^*_{45}$ corresponds to L* at light receiving angles of 0°, and $L^*_{110}$ corresponds to L* at light receiving angles of -65°.)

[Table 1]

|  | 3 colors | Red | Blue | Yellow | Surface protective layer |
|---|---|---|---|---|---|
| Flop index | 8.26 (Ex. 1-1) | 9.93 (Ex. 2-1) | 8.51 (Ex. 3-1) | 7.34 (Ex. 4-1) | A |
|  | 12.57 (Ex. 1-2) | 12.27 (Ex. 2-2) | 11.24 (Ex. 3-2) | 9.67 (Ex. 4-2) | B |
|  | 10.20 (Ex. 1-3) | 10.10 (Ex. 2-3) | 9.87 (Ex. 3-3) | 8.66 (Ex. 4-3) | C |
|  | 10.89 (Ex. 1-4) | 10.24 (Ex. 2-4) | 9.87 (Ex. 3-4) | 7.97 (Ex. 4-4) | D |

[Table 2]

|  | 3 colors | Red | Surface protective layer |
|---|---|---|---|
| Flop index | <0 (Comp. Ex. 1-1) | <0 (Comp. Ex. 2-1) | A |
| | 3.45 (Comp. Ex. 1-2) | 4.23 (Comp. Ex. 2-2) | B |
| | 2.67 (Comp. Ex. 1-3) | 2.98 (Comp. Ex. 2-3) | C |
| | 2.87 (Comp. Ex. 1-4) | 3.41 (Comp. Ex. 2-4) | D |

As shown in Table 1, the flop index was high in each Example, and it was confirmed that the gloss feeling of the metal substrate was well expressed. Also, since the organic colorant was used, vivid design expression was possible while suppressing the gloss feeling from being hidden by the design layer. Meanwhile, as shown in Table 2, it was confirmed that the flop index in each Comparative Example was low, and the gloss feeling of the metal substrate was not well expressed. This is presumed that, since the inorganic colorant was used, the gloss feeling was largely hidden by the design layer.

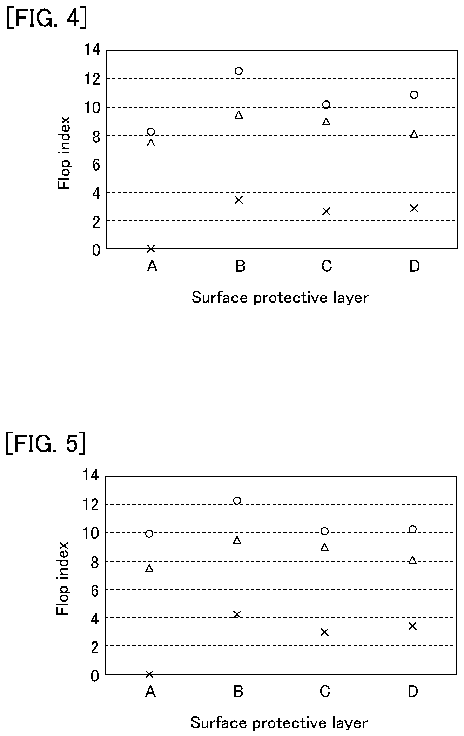

FIG. 4 is a graph showing the results of Examples 1-1 to 1-4 and Comparative Examples 1-1 to 1-4. Incidentally, $\Delta$ shown in FIG. 4 is the flop index of the samples produced in the same manner as Examples 1-1 to 1-4, except that no design layer was formed, and the same applies to $\Delta$ shown in FIG. 5 to FIG. 7 below. As shown in FIG. 4, as compared to Comparative Examples 1-1 to 1-4, the flop index in Examples 1-1 to 1-4 was high, and it was confirmed that the gloss feeling of the metal substrate was well expressed. Also, as compared to Comparative Examples 1-1 to 1-4, it was confirmed that the flop index was less likely to be influenced by the gloss feeling of the first surface (the surface of the surface protective layer), and the gloss feeling of the metal substrate was able to evaluate accurately.

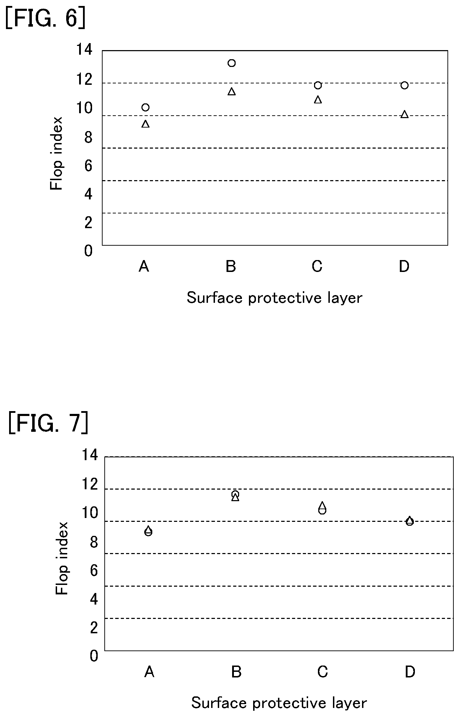

FIG. 5 is a graph showing the results of Examples 2-1 to 2-4 and Comparative Examples 2-1 to 2-4. As shown in FIG. 5, as compared to Comparative Examples 2-1 to 2-4, the flop index in Examples 2-1 to 2-4 was high, and it was confirmed that the gloss feeling of the metal substrate was well expressed. Also, FIG. 6 is a graph showing the results of Examples 3-1 to 3-4, and FIG. 7 is a graph showing the results of Examples 4-1 to 4-4. As shown in FIG. 6 and FIG. 7, the flop index in Examples 3-1 to 3-4 and Examples 4-1 to 4-4 was high, and it was confirmed that the gloss feeling of the metal substrate was well expressed.

[Example 5-1]

Firstly, in the same manner as in Example 1-1, an underlying layer was formed on the entire surface of the aluminum plate. Then, the entire surface of the underlying layer was coated with the following first composition for a design layer, by a gravure offset printing, to form an inorganic colorant layer so that the film thickness after drying was 0.5 $\mu$m or more and 1.5 $\mu$m or less.

(First composition for design layer)

Thermosetting fluorine resin (fluoroethylene-vinyl ether copolymer)
Curing agent (isocyanate)
Inorganic colorant (carbon black; 4% by mass with respect to the thermosetting fluorine resin)
Solvent (xylene: cyclohexane = 1: 1, mass ratio)
Solid content: 15% by mass

Then, the entire surface of the inorganic colorant layer was coated with the following second composition for a design layer, by a gravure offset printing, to form an organic colorant layer so that the film thickness after drying was 0.5 $\mu$m or more and 1.5 $\mu$m or less. Thereby, a design layer including an inorganic colorant layer and an organic colorant layer was obtained.

(Second composition for design layer)

Thermosetting fluorine resin (fluoroethylene-vinyl ether copolymer)
Curing agent (isocyanate)
Organic colorant (3-color blend of perylene based pigment (red), cyanine based pigment (blue), nickel azo complex based pigment (yellow); 15% by mass with respect to the thermosetting fluorine resin)
Solvent (xylene : cyclohexane = 1 : 1, mass ratio)
Solid content: 19% by mass

Then, in the same manner as in Example 1-1, a decorative member was obtained by forming a surface protective layer A on the entire surface of the design layer.

[Examples 5-2 to 5-4]

Decorative members were respectively obtained in the same manner as in Example 5-1 except that only the perylene based pigment (red) was used; only the cyanine based pigment (blue) was used, and only the nickel azo complex based pigment (yellow) was used as the organic colorant included in the second composition for a design layer.

[Comparative Example 3-1]

A decorative member was obtained in the same manner as in Example 5-1 except that the organic colorant layer was not formed.

[Comparative Example 3-2]

A decorative member was obtained in the same manner as in Example 5-1 except that the organic colorant layer was not formed, and further, the composition for a surface protective layer B described above was used instead of the composition for a surface protective layer A.

[Comparative Example 3-3]

A decorative member was obtained in the same manner as in Example 5-1 except that the organic colorant layer was not formed, and further, the composition for a surface protective layer C described above was used instead of the composition for surface protective layer A.

[Comparative Example 3-4]

A decorative member was obtained in the same manner as in Example 5-1 except that the organic colorant layer was not formed, and further, the composition for a surface protective layer D described above was used instead of the composition for surface protective layer A.

[Evaluation]

The flop index was measured using the decorative member obtained in each of Examples 5-1 to 5-4 and Comparative Examples 3-1 to 3-4. The method for measuring was similar to that described above. The results are shown in Table 3 and Table 4.

[Table 3]

|  | 3 colors | Red | Blue | Yellow | Surface protective layer |
|---|---|---|---|---|---|
| Flop index | 7.09 (Ex. 5-1) | 7.95 (Ex. 5-2) | 7.11 (Ex. 5-3) | 7.95 (Ex. 5-4) | A |

[Table 4]

| Surface protective layer | A | B | C | D |
|---|---|---|---|---|
| Flop index | 7.69 (Comp. Ex. 3-1) | 9.68 (Comp. Ex. 3-2) | 8.91 (Comp. Ex. 3-3) | 8.05 (Comp. Ex. 3-4) |

As shown in Table 3 and Table 4, it was confirmed that the flop index in Examples 5-1 to 5-4 including the organic colorant layer was high at a comparable level to that in Comparative Examples 3-1 to 3-4 including no organic colorant layer. In other words, it was confirmed that the hiding of the gloss feeling by the organic colorant layer was restrictive, and vivid design expression by the organic colorant layer was possible.

[Examples 6-1 to 6-3]

A decorative member was obtained in the same manner as in Example 2-1, Example 3-1 and Example 4-1 respectively except that the following composition for an underlying layer X was used as the composition for an underlying layer, and the following composition for a surface protective layer A2 was used instead of the composition for surface protective layer A.

(Composition for underlying layer X)

Thermosetting fluorine resin (fluoroethylene-vinyl ether copolymer)
Curing agent (isocyanate)
Grey based colorant (titanium oxide, chromium oxide; 5% by mass with respect to the thermosetting fluorine resin)
Ultraviolet absorber
Hindered amine based light stabilizer
Solid content: 17% by mass

(Composition for surface protective layer A2)

Thermosetting fluorine resin (fluoroethylene-vinyl ether copolymer)
Curing agent (isocyanate)
Ultraviolet absorber
Hindered amine based light stabilizer
Solvent (xylene: toluene = 1: 1, mass ratio)
Solid content...30% by mass

[Evaluation]

The weather resistance of the decorative member obtained in Examples 6-1 to 6-3 was evaluated. An accelerated weather resistance test was carried out to the obtained decorative member using Sunshine Weather Meter (SWOM). Specifically, under the following irradiation conditions, a test carrying out the following cycle repeatedly until the total time of the ultraviolet irradiation was 10000 hours, was carried out; 1 cycle includes a total of 120 minutes of 102 minutes of the irradiation, and then, 18 minutes of the irradiation and spraying.

<Conditions for accelerated weather resistance test>

(Testing device)

Product Name: "S80" from Suga Test Instruments Co., Ltd.

(Irradiation conditions)

Illuminance: 255 W/cm$^2$, black panel temperature: 65°C, bath humidity: 50%RH, time: irradiation for 102 minutes, and then, irradiation and spray for 18 minutes.
The weather resistance of the decorative member was evaluated by the color difference and the gloss retention rate. As for the color difference, the value of the color difference ($\Delta E$) before and after subjecting to the accelerated weather resistance test was measured using a spectrophotometric color-difference meter (spectrophotometric colorimeter CM-5 from Konica Minolta Inc.). Meanwhile, as for the gloss retention rate, the 60° gloss value of the surface protective layer was measure, using a gloss meter, in accordance with JIS K 5600. The 60° gloss value was determined as an average value of the measured value at 10 locations. The results thereof are shown in Table 5.

[Table 5]

|  | Ex. 6-1 (Red) | Ex. 6-2 (Blue) | Ex. 6-3 (Yellow) |
| --- | --- | --- | --- |
| $\Delta E$ | 1.40 | 2.89 | 2.00 |

14

(continued)

|  | Ex. 6-1 (Red) | Ex. 6-2 (Blue) | Ex. 6-3 (Yellow) |
|---|---|---|---|
| Glossiness (before test) | 8.6 | 9.3 | 12.1 |
| Glossiness (after test) | 8.3 | 8.9 | 12.0 |
| Gloss retention rate (%) | 96.5 | 95.7 | 99.2 |

In Examples 6-1 to 6-3, as shown in Table 5, it was confirmed that the value of the color difference (ΔE) was low, the gloss retention rate was high, and the weather resistance was excellent. Although the organic colorants are known to have lower weather resistance than the inorganic colorants, decorative members that can be applied to exterior members were obtained in Examples 6-1 to 6-3, while using organic colorants.

[Example 7]

An aluminum plate (A3004PH32, dimensions: 300 mm × 600 mm, thickness: 1.0 mm, chromate-treated) was prepared as the metal substrate. Then, as a pretreatment, the prepared aluminum plate was washed with hot water, and a polyester based primer was applied, and then, dried at 200°C (achieved temperature of the substrate).

Then, the entire surface of the aluminum plate was coated with the following composition for an underlying layer, with a curtain flow coater, so that the film thickness after drying was 18 μm. After that, it was baked at 216°C (achieved temperature of the substrate) to form an underlying layer.

(Composition for underlying layer)

Thermosetting polyester based resin
Solvent (xylene: cyclohexanone = 1: 1)
Solid content...40% by mass

Then, the entire surface of the underlying layer was coated with the following composition for a design layer, by a gravure offset printing, so that the film thickness after drying was 0.5 μm or more and 1.5 μm or less.

(Composition for design layer)

Thermosetting polyester based resin
Organic colorant (3-color blend of perylene based pigment (red), cyanine based pigment (blue), nickel azo complex based pigment (yellow); 7.5% by mass with respect to the thermosetting fluorine resin)
Solvent (xylene: cyclohexane = 1: 1, mass ratio)
Solid content: 19% by mass

Then, the entire surface of the design layer was coated with the following composition for a surface protective layer, with a bar coater, so that the film thickness after drying was 22 μm. After that, it was baked at 224°C (achieved temperature of the substrate) to form a surface protective layer, and thereby obtained a decorative member.

(Composition for surface protective layer)

Thermosetting polyester based resin
Ultraviolet absorber
Hindered amine based light stabilizer
Filler (silica, average particle size of 2 μm; 3% by mass with respect to the thermosetting polyester based resin)
Solvent (xylene: cyclohexanone = 1: 1)
Solid content...42% by mass

The weather resistance of the obtained decorative member was evaluated as similar to the above. As a result, the color difference (ΔE) and the gloss retention rate were maintained to some extent until the ultraviolet irradiation time reached 500 hours. However, when the ultraviolet irradiation time reached 1000 hours, the color difference (ΔE) was 4.3 and the gloss retention rate was 10%. Comparing Example 7 with Examples 6-1 to 6-3, it was confirmed that the weather resistance was significantly improved by using the fluorine based resin as the thermosetting resin.

As described above, the present disclosure provides, for example, the following inventions.

[1] A decorative member comprising a metal substrate and a design layer, in this order in a thickness direction, wherein

the design layer includes an organic colorant; and
on a first surface located on the design layer side based on the metal substrate, the decorative member includes a region X having a flop index of 4.5 or more.

[2] The decorative member according to [1], wherein, viewing from the thickness direction, when an area of the design layer is regarded as $S_A$, and an area of the region X is regarded as $S_B$, a ratio ($S_B/S_A$) of the $S_B$ with respect to the $S_A$ is 1% or more.

[3] The decorative member according to [1] or [2], wherein the design layer includes a pattern layer including the organic colorant.

[4] The decorative member according to any one of [1] to [3], wherein the design layer is a baking layer.

[5] The decorative member according to any one of [1] to [4], wherein the metal substrate is an aluminum substrate, an aluminum alloy substrate, a steel substrate or a stainless steel substrate.

[6] The decorative member according to any one of [1] to [5], wherein the design layer includes a cured product of a thermosetting resin.

[7] The decorative member according to any one of [1] to [6], wherein the decorative member includes an underlying layer between the metal substrate and the design layer.

[8] The decorative member according to [7], wherein the underlying layer includes a cured product of a thermosetting resin.

[9] The decorative member according to any one of [1] to [8], wherein the decorative member includes a surface protective layer on an opposite side to the metal substrate, based on the design layer.

[10] The decorative member according to [9], wherein the surface protective layer includes a cured product of a thermosetting resin.

[11] The decorative member according to any one of [1] to [10], wherein the decorative member includes a surface protective layer on an opposite side to the metal substrate, based on the design layer, and
the surface protective layer includes a cured product of fluorine based resin that is a thermosetting resin.

[12] The decorative member according to any one of [1] to [11], wherein the decorative member is an exterior member.

[13] The decorative member according to any one of [1] to [11], wherein the decorative member is an interior member.

[14] A method for producing a decorative member producing the decorative member according to any one of [1] to [13], the method comprising:

a metal substrate preparing step of preparing the metal substrate; and
a design layer forming step of forming the design layer by coating one surface side of the metal substrate with a composition including the organic colorant, and heat curing.

Reference Signs List

1: metal substrate
2: design layer
3: primer layer
4: underlying layer
5: surface protective layer
10: decorative member

**Claims**

**1.** A decorative member comprising a metal substrate and a design layer, in this order in a thickness direction, wherein

the design layer includes an organic colorant; and
on a first surface located on the design layer side based on the metal substrate, the decorative member includes a region X having a flop index of 4.5 or more.

2. The decorative member according to claim 1, wherein, viewing from the thickness direction, when an area of the design layer is regarded as $S_A$, and an area of the region X is regarded as $S_B$, a ratio ($S_B/S_A$) of the $S_B$ with respect to the $S_A$ is 1% or more.

3. The decorative member according to claim 1, wherein the design layer includes a pattern layer including the organic colorant.

4. The decorative member according to claim 1, wherein the design layer is a baking layer.

5. The decorative member according to claim 1, wherein the metal substrate is an aluminum substrate, an aluminum alloy substrate, a steel substrate or a stainless steel substrate.

6. The decorative member according to claim 1, wherein the design layer includes a cured product of a thermosetting resin.

7. The decorative member according to claim 1, wherein the decorative member includes an underlying layer between the metal substrate and the design layer.

8. The decorative member according to claim 7, wherein the underlying layer includes a cured product of a thermosetting resin.

9. The decorative member according to claim 1, wherein the decorative member includes a surface protective layer on an opposite side to the metal substrate, based on the design layer.

10. The decorative member according to claim 9, wherein the surface protective layer includes a cured product of a thermosetting resin.

11. The decorative member according to claim 1, wherein the decorative member includes a surface protective layer on an opposite side to the metal substrate, based on the design layer, and
the surface protective layer includes a cured product of fluorine based resin that is a thermosetting resin.

12. The decorative member according to claim 11, wherein the decorative member is an exterior member.

13. The decorative member according to claim 11, wherein the decorative member is an interior member.

14. A method for producing a decorative member producing the decorative member according to any one of claims 1 to 13, the method comprising:

a metal substrate preparing step of preparing the metal substrate; and
a design layer forming step of forming the design layer by coating one surface side of the metal substrate with a composition including the organic colorant, and heat curing.

[FIG. 1]

[FIG. 2]

[FIG. 3]

(a)

(b)

(c)

(d)

(e)

[FIG. 4]

[FIG. 5]

[FIG. 6]

[FIG. 7]

## INTERNATIONAL SEARCH REPORT

| | International application No. |
|---|---|
| | **PCT/JP2024/027148** |

| A. | CLASSIFICATION OF SUBJECT MATTER |
|---|---|

*B32B 15/08*(2006.01)i; *E04F 13/12*(2006.01)i
FI: B32B15/08 H; E04F13/12 A

According to International Patent Classification (IPC) or to both national classification and IPC

| B. | FIELDS SEARCHED |
|---|---|

Minimum documentation searched (classification system followed by classification symbols)

B32B15/08; E04F13/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 7223187 B1 (DAI NIPPON PRINTING CO., LTD.) 15 February 2023 (2023-02-15) claim 17, paragraphs [0002], [0035], [0056], [0069]-[0070], [0093], [0099] | 1-3, 5-10, 12-13 |
| Y | | 11 |
| A | | 4, 14 |
| X | JP 2022-78782 A (MAZDA MOTOR CORPORATION) 25 May 2022 (2022-05-25) paragraphs [0058], [0060], examples | 1-2, 4-10, 12, 14 |
| Y | | 11 |
| A | | 3, 13 |
| X | JP 2022-128398 A (NIPPON PAINT AUTOMOTIVE COATINGS CO., LTD.) 01 September 2022 (2022-09-01) examples, paragraph [0234] | 1-2, 4-10, 12, 14 |
| Y | | 11 |
| A | | 3, 13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 October 2024** | **22 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

| International application No. |
| --- |
| **PCT/JP2024/027148** |

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| Y | JP 3047120 U (DAI NIPPON PRINTING CO., LTD.) 31 March 1998 (1998-03-31) paragraph [0009] | 11 |
| Y | JP 2023-6532 A (NIPPON STEEL COATED SHEET CORP.) 18 January 2023 (2023-01-18) paragraph [0002] | 11 |

Form PCT/ISA/210 (second sheet) (July 2022)

## INTERNATIONAL SEARCH REPORT
### Information on patent family members

International application No.

**PCT/JP2024/027148**

| Patent document cited in search report | | | Publication date (day/month/year) | Patent family member(s) | Publication date (day/month/year) |
|---|---|---|---|---|---|
| JP | 7223187 | B1 | 15 February 2023 | (Family: none) | |
| JP | 2022-78782 | A | 25 May 2022 | US 2024/0018319 A1 paragraphs [0071], [0073], examples<br>EP 4227087 A1<br>CN 116472124 A | |
| JP | 2022-128398 | A | 01 September 2022 | US 2024/0141182 A1 examples<br>EP 4296056 A1<br>CN 116963906 A | |
| JP | 3047120 | U | 31 March 1998 | (Family: none) | |
| JP | 2023-6532 | A | 18 January 2023 | (Family: none) | |

Form PCT/ISA/210 (patent family annex) (July 2022)

**EP 4 755 626 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022209543 A